# EUROPEAN PATENT SPECIFICATION

(11) **EP 2 498 355 B1**
(45) Date of publication and mention of the grant of the patent: **01.01.2014**
(21) Application number: 11157808.4
(22) Date of filing: 11.03.2011
(51) Int. Cl.: H02G 3/06

(54) **Sheet metal tray module for channelling cables**
Metalblechschalle Module für Kabelkanälen
Module de support en tôle metallique pour caniveaux de cables

(43) Date of publication of application: 12.09.2012
(73) Proprietor: Aiscan, S.L., 03410 Biar (ES)
(72) Inventor:
(74) Representative: Arpe Fernandez, Manuel de

(56) References cited:
- DE-U1-202008 009 852
- ES-A1- 2 156 487

## Description

### Scope and prior art

This invention relates to a sheet tray module for channelling cables.

Cable channels made of modules consisting of U-shaped metal sheet sections are known in the art. The ends of such modules are adapted so that they can be joined by means of a male-female coupling.

Normally, the upper part of the side walls of such trays include a reinforcing rib with a general tubular shape towards the inside part of the tray.

Document ES 2156487 reveals a connection system for cable trays. In this case, the side walls of the upper end of the male part male consist of a tab arranged so that it can be slipped through a groove formed beneath the reinforcing rib of the side walls of the female end of the adjacent tray; furthermore, the tabs are arranged so that they may exercise a certain pressure on the relevant groove.

However, this method of connecting the different modules is not strong enough, and it is necessary to use additional fixing screws and nuts mounted in the relevant mounting holes of two adjacent modules.

Document ES 1053040 describes a wire tray with fast coupling means which do not unavoidably require the use of fixing means, like screws and nuts. The upper end of the tray consists of a U-shaped metal section incorporating reinforcing rib, and the ribs of the male end and the ribs of the female end are arranged so that they can be coupled through slipping. However, although these ribs fit with a certain pressure, the connection of the trays is scarcely resistant. Consequently, the side walls of the trays incorporate a series of holes to house clamp-shaped fixing means that are inserted in the orifices.

### Summary of the Invention

On the basis of the state of the art which has been previously described, the object of the invention is to develop a tray module for channelling cables that allows to solve the above mentioned problems, so that the connection of the adjacent modules is sufficiently resistant to avoid the use of additional fixing means, like screws and nuts, and does not require special requisites in terms of the space needed to mount the relevant channel.

This goal is achieved through the characteristics set out in claim 1. Other additional advantages and objects will be achieved thanks to the characteristics set out in the dependent claim.

The invention consists of a metal tray module, with a cross section essentially in the shape of a U, which delimits a back wall, which is essentially flat, and side walls that are essentially perpendicular to the back wall. A first section of the side walls is finished with a reinforcing rib, which generally has a tubular shape, and the second section of the side walls is arranged with coupling tabs. The relevant ends of these sections are arranged to be connected, by means of a male-female coupling, to the relevant module of the adjacent tray. According to the invention, the module is characterized in that:
- the side walls corresponding to the first section include longitudinal notches, that are connected to the inside part of the reinforcing ribs, and that are aimed to tightly house the connecting tabs;
- the connecting tabs are configured as a straight tab that extends obliquely towards the inside part of the tray module, and
- such side walls are arranged so that they are flexible enough to experience a elastic deformation towards the inside part of the module as a result of a force exercised transversely with respect to the longitudinal direction of the module, and to recover their initial position as soon as such transversal force is no longer exercised. Therefore, the connecting tabs that form part of the side walls are tightly inserted in the notches of an adjacent module, which is connected by means of a male-female coupling through its relevant ends.

According to a further characteristic of the invention, it is advantageous, for the connection of adjacent tray modules, when the ends of the back wall of the tray module incorporate on one hand and pass-through notches, and on the other hand, projecting pins obtained by cutting the metal sheet that forms the back wall. Therefore, when two adjacent tray modules are connected at their ends by means of a male-female coupling, the projecting pins that are folded *down*wards fit in the relevant pass-through notches.

### Brief description of the drawings

Other characteristics and advantages of the invention will be more readily apparent through the description that follows, with reference to the accompanying drawings, that show a non limiting exemplary embodiment and where the following has been depicted:
Figure 1 shows an upwards perspective view of a tray module according to the invention.
Figure 2 shows an elevation front view of the tray module according to figure 1.

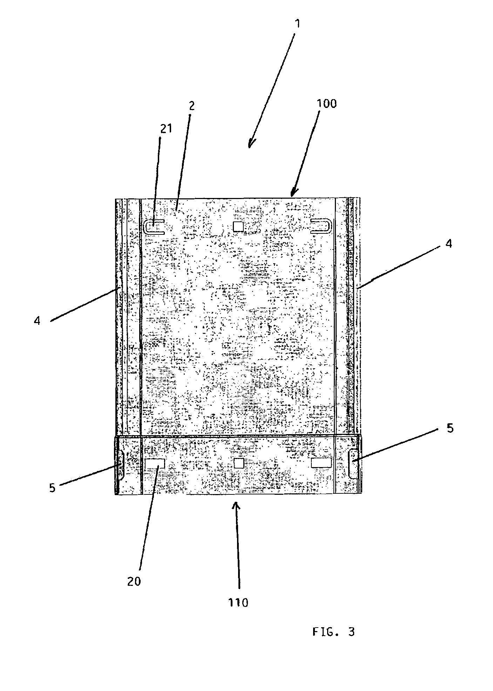

Figure 3 shows an upwards plan view of the module according to figure 1.
Figure 4 shows a perspective view of the coupling of two tray modules according to figure 1, to form a section of the cable channelling system.

### Detailed description on a preferred embodiment

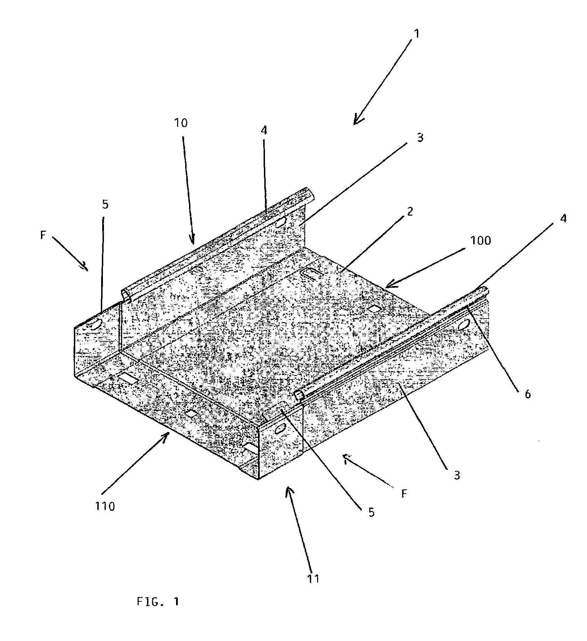

As it can be seen in figure 1, the tray module is arranged as a metal section, which is generally designated as 1, and which has a cross-section essentially in the shape of a U, determining an essentially flat back wall 2 and side walls 3 that are essentially perpendicular to the back wall.

The metal section 1 has a first section 10 with walls ended in a reinforcing rib 4 which generally has a tubular shape and a second section 11 with side walls that incorporate respective coupling tabs 5.

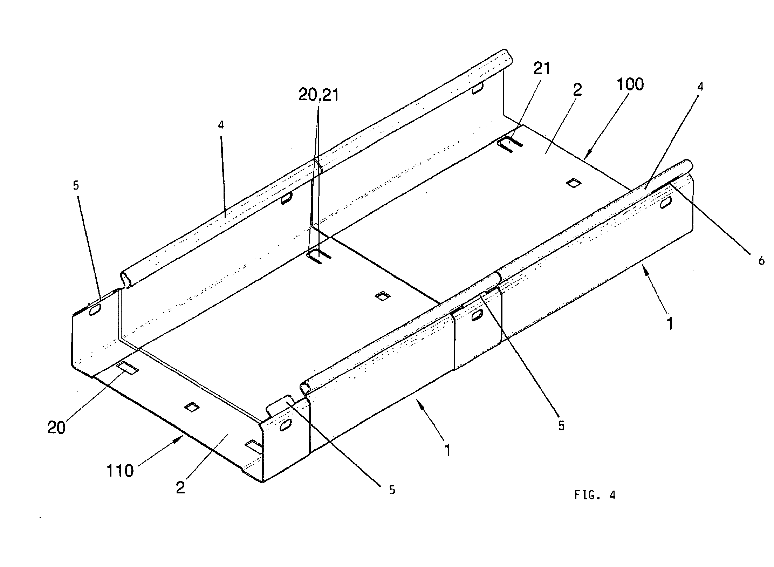

It can be appreciated that one end *110* of the metal section 1 is wider than the relevant opposite end *100*, so that two tray modules 1 can be connected through their relevant ends 100, 110, by means of a male-female coupling, as seen in figure 4, to form a section of the cable channelling system.

As it can be seen in figure 1, for instance, the relevant side walls 3 of the first section 10 incorporate longitudinal notches 6 connected to the inside part of the reinforcing ribs 4 and that, as it will be explained in more detail below, serve to house the coupling tabs 5.

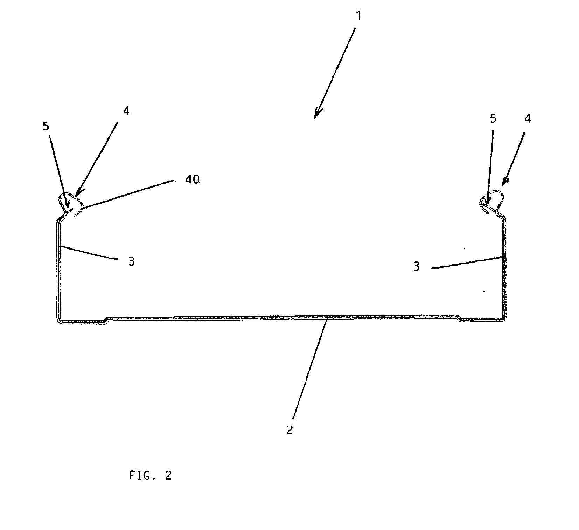

Referring now to figure 2, it can be appreciated that the coupling tabs 5 configured in the upper edge of the side walls have been designed as straight tabs that extend obliquely towards the inside part of the tray module 1.

As it can be seen in figure 4, two tray modules 1 are connected through their relevant ends 100, 110 by means of a male-female coupling. The coupling tabs 5 are introduced through the longitudinal notches 6, so that they tightly fit into the relevant reinforcing rib 4 and rest against the inner side 40 of such rib which is closest to the inside part of the tray module.

The assembly of the modules 1 is made easier by the fact that the side walls 3 are essentially flexible, to allow their elastic deformation towards the inside part of the module through a force F transversely exercised with respect to its length. Furthermore, and thanks to such flexibility of the side walls 3 and the coupling tabs 5, they will recover their initial position as soon as such transversal force is no longer exercised, and they will be tightly fitted in the notches 6 of an adjacent module connected through the relevant ends 100, 110 by means of a male-female coupling.

As the tray module is made of a metal sheet material, it is possible to configure the degree of flexibility of the side walls, through an adequate selection of the material and its thickness.

The joint between the tray modules 1 according to the previous paragraphs withstands the tensile and bending efforts supported by the adjacent tray modules and allows providing cable channelling sections that are sufficiently resistant and simplifies the assembly operation. Thus, an operator may connect the modules joining the relevant sections 100, 110 by means of male-female coupling, manually exercising for instance, a force F on the side walls 3, so that the coupling tabs 5 are easily inserted in the relevant notch 6, where they are firmly fixed and rest against the inside part of the relevant rib 4, thanks to their flexible nature, as soon as such force F is no longer exercised.

As a result, the assembly of the modules can be carried out, so to speak, in a single plane, without the need to rotate the modules with respect to the longitudinal assembly direction, since such manoeuvre might be thwarted by the restrictions imposed by the assembly space, e.g., when the cable channels run very close to the wall, for instance, when the cannels are hanging from the ceiling and there is no space available to rotate the modules.

As it can be seen in the figures, it is possible to arrange the ends 100, 110 of the back wall 2 of the tray module 1 with pass-through notches 20, on one hand and, on the other hand, with projecting pins 21 made by cutting the metal sheet that forms the back wall 2. As it can be seen in Figure *4*, when two adjacent tray modules 1 are connected at their relevant ends 100, 110, the pins 21 are folded *down*wards to fit in the relevant pass-through notches 20, thus providing an additional coupling between the tray modules, that withstands the longitudinal efforts exercised between the adjacent modules.

As it will be easily understood by any person skilled in the art, the foregoing description is a mere illustration of a preferred embodiment of the invention, and therefore, various technical modifications of any kind can be introduced, and the invention will only be limited by the scope of the following claims.

## Claims

1. Sheet metal tray module for channelling cables, in the shape of a metal section (1) with a cross-section essentially in the shape of a U, which delimits a back wall (2) which is essentially flat and side walls (3) that are essentially parallel to the back wall, comprising a first section (10) where the walls are finished in the shape of a reinforcing rib (4) which generally has a tubular shape, and a second section (11) where the side walls are respectively arranged with coupling tabs (5), the relevant ends (100, 110) of these sections are arranged to be attached, by means of a male-female coupling, to the relevant module of the adjacent tray, the module is **characterized in that**:
- the side walls (3) corresponding to the first section (10) include longitudinal notches (6) that are connected to the inside part of the reinforcing rib (4) and that are aimed to tightly house the connecting tabs (5);
- the connecting tabs (5) are configured as a straight tab that extends obliquely from the side walls (3) towards the inside part of the tray module (1), and
- such side walls (3) are essentially flexible, so that they may experience a elastic deformation towards the inside part of the module as a result of a force (F) exercised transversely with respect to the longitudinal direction of the module (1) and to recover their initial position as soon as such transversal force is no longer exercised, so that the coupling tabs (5) are tightly inserted in the notches (6) of an adjacent module which is connected by means of a male-female coupling provided at its relevant ends (100, 110).

2. Sheet metal tray module for channelling cables, according to claim 1, **characterized in that** the ends (100, 110) of the back wall (2) of the tray module incorporate pass-through notches (20) on one hand and pins (21) made by cutting the metal sheet that forms the back wall (2) on the other hand, so that when two adjacent tray modules (1, 1) are connected at their ends (100, 110) by means of a male-female coupling, the pins (21) are folded *down*wards to fit in the relevant pass- through notches (20).

## Patentansprüche

1. Modul einer Kabelpritsche aus Blech mit einem Profil (1) mit einem im wesentlichen U-förmigen Querschnitt begrenzt durch eine im wesentlichen flache Rückwand (2) und im wesentlichen senkrecht zur Rückwand angeordnete Seitenwände (3) mit einem ersten Abschnitt (10), bei dem die Wände mit einem, normalerweise rohrförmigen Verstärkungswulst (4), enden, und mit einem zweiten Abschnitt (11), bei dem die Seitenwände mit entsprechenden Verrastungsansätzen (5) versehen sind, Abschnitte, die entsprechende (100, 110) Endabschnitte aufweisen, die für eine Steckverbindung mit dem anliegenden Pritschenmodul ausgelegt sind, **dadurch gekennzeichnet, dass**:
- an den Seitenwänden (3) des ersten Abschnitts (10) Längsrillen (6) vorgesehen sind, die mit dem Innenraum der Verstärkungswulste (4) verbunden und für die Ankupplung der Verrastungsansätze (5) bestimmt sind.
- die Verrastungsansätze (5) wie gerade Ansätze ausgelegt sind, die sich schräg von den Seitenwänden (3) aus ins Innere des Pritschenmoduls (1) erstrecken, und
- besagte Seitenwände (3) im wesentlichen flexibel sind, so dass sie elastisch nach innen im Modul verformbar sind, und zwar infolge einer quer zur Längsrichtung des Moduls (1) ausgeübten Kraft, und zur Wiederherstellung der Anfangsposition, sobald besagte Querkraft nicht mehr vorhanden ist, so dass die Verrastungsansätze (5) fest in den Rillen (6) eines danebenliegenden Moduls eingehakt bleiben, das über eine Steckverbindung an seinen entsprechenden Endabschnitten (100, 110) angeschlossen ist.

2. Kabelpritschenmodul aus Blech übereinstimmend mit Anspruch 1, **dadurch gekennzeichnet, dass** die Endabschnitte (100, 110) der Rückwand des Pritschenmoduls einerseits durchgehende Aussparungen (20) aufweisen und andererseits Bügel (21), die durch Ausschneiden aus dem Blech der Rückwand (2) gebildet werden, so dass, wenn zwei aneinanderliegende Pritschenmodule (1, 1) durch Steckverbindung an ihren Endabschnitten (100, 110) miteinander verbunden werden, diese Bügel (21) nach unten gebogen werden, um in die entsprechenden durchgehenden Aussparungen (20) einzugreifen.

## Revendications

1. Module de chemin de câble pour canalisation de câbles en tôle en forme de profilé (1) de section transversale essentiellement en forme de U, délimitant une paroi de fond (2) essentiellement plate et des parois latérales (3) essentiellement perpendiculaires à la paroi de fond, avec un premier tronçon (10) où les parois se terminent par un bourrelet de renforcement (4), généralement tubulaire, et un deuxième tronçon (11) où les parois latérales sont conçues avec des ergots d'accrochage (5) et dont les tronçons ont des extrémités respectives (100, 110) qui sont prévues pour être accouplées par assemblage à un module de chemin de câble adjacent, **caractérisé en ce que**:
- sur les parois latérales (3) du premier tronçon (10) les rainures longitudinales (6) qui sont prévues communiquent avec l'intérieur du bourrelet de renforcement (4) et sont destinées à accoupler les ergots d'accrochage (5) ;
- les ergots d'accrochage (5) sont conçus comme un ergot droit (5) qui s'étend de manière oblique à partir des parois latérales (3) vers l'intérieur du module de chemin de câble (1), ET
- ces parois latérales (3) sont essentiellement flexibles afin qu'elles puissent endurer une déformation élastique vers l'intérieur du module, à la suite d'une force (F) exercée transversalement par rapport à la direction longitudinale du module (1) et afin de récupérer leur position initiale dès que cette force transversale cessera de s'exercer, de sorte que les ergots d'accrochage (5) restent solidement insérés dans les rainures (6) d'un module adjacent qui se trouve accouplé par assemblage de ses extrémités correspondantes (100, 110).

2. Module de chemin de câbles pour canalisation de câbles en tôle selon la revendication 1, **caractérisé en ce que** les extrémités (100, 110) de la paroi du fond du module de chemin de câble incorporent par une partie des échancrures traversantes (20), et par une autre partie des pattes (21) formées par des découpes de la tôle de la paroi de fond (2), de sorte que quand deux modules de chemin de câble (1, 1) adjacents s'unissent grâce à l'assemblage de leurs extrémités respectives (100, 110), les pattes (21) soient pliées vers le bas pour que leurs échancrures traversantes respectives s'encastrent.
